# EUROPÄISCHE PATENTANMELDUNG

(11) **EP 4 273 033 A1**
(43) Veröffentlichungstag der Anmeldung: **08.11.2023**
(21) Anmeldenummer: 23170352.1
(22) Anmeldetag: 27.04.2023
(51) Int. Cl.: B62J 45/412, B62J 45/421, B62J 45/413, B62M 6/55, B62M 6/45

(54) **ANTRIEBSVORRICHTUNG FÜR EIN FAHRRAD UND VERFAHREN ZUR STEUERUNG**

(30) Priorität: 02.05.2022 DE 102022204271
(71) Anmelder: ZF Friedrichshafen AG, 88046 Friedrichshafen (DE)
(72) Erfinder: Sommer, Marc, 88074 Meckenbeuren (DE); Rösch, Patrik, 88326 Aulendorf (DE)
(74) Vertreter: ZF Friedrichshafen AG

(57) **Zusammenfassung**

Die Erfindung betrifft eine Antriebsvorrichtung (1) für ein Fahrrad (100), umfassend
• ein Schaltgetriebe (2) mit mehreren Gängen und einer Abtriebswelle (3),
• eine Kurbelwelle (5) mit einer Tretkurbel (6) zum Einleiten einer Antriebsleistung eines Fahrradfahrers in das Schaltgetriebe (2), wobei die Kurbelwelle (5) mit der Abtriebswelle (3) wirkverbunden ist,
• eine elektrische Maschine (7) mit einer Rotorwelle (8) zum Einleiten einer Antriebleistung der elektrischen Maschine (7) in das Schaltgetriebe (2), wobei die Rotorwelle (8) mit der Abtriebswelle (3) wirkverbunden ist, wobei die elektrische Maschine (7) dazu eingerichtet ist, eine Trittfrequenz des Fahrradfahrers zumindest zu verringern,
• Mittel zum Erfassen eines Tretkurbelwinkels sowie einer Kurbelwellendrehzahl und Generieren entsprechender Sensordaten,
• Mittel zum Erfassen einer Abtriebswellendrehzahl und Generieren entsprechender Sensordaten,
• Mittel zum Erfassen einer Rotorwellendrehzahl und Generieren entsprechender Sensordaten, und
• eine Steuereinrichtung (10), die dazu ausgebildet ist, diese Sensordaten zu verarbeiten und eine Gangrückschaltung aus einem aktuell eingelegten Gang in einen nächstkleineren Gang in Abhängigkeit dieser Sensordaten durch Bestromung der elektrischen Maschine (7) zu steuern.

Ferner betrifft die Erfindung ein Verfahren zur Steuerung der Antriebsvorrichtung (1), eine Steuereinrichtung (10) und ein Fahrrad (100).

## Beschreibung

Die Erfindung betrifft eine Antriebsvorrichtung für ein Fahrrad, mit einem Schaltgetriebe, einer Kurbelwelle, einer elektrischen Maschine und einer Steuereinrichtung. Ferner betrifft die Erfindung ein Verfahren zur Steuerung der Antriebsvorrichtung, eine Steuereinrichtung zur Durchführung des Verfahrens und ein Fahrrad mit einer solchen Antriebsvorrichtung.

Aus dem Stand der Technik ist eine Vielzahl von Fahrrädern bekannt, bei denen neben einem Schaltgetriebe ein Elektromotor zum Einsatz kommt. Beispielsweise offenbart die DE 10 2016 225 159 A1 ein Getriebe für ein Fahrrad, mit einer Abtriebswelle, einem Schaltgetriebe, das mit einer Tretlagerkurbelwelle wirkverbindbar ist und das mit der Abtriebswelle wirkverbunden oder wirkverbindbar ist, und einer elektrischen Maschine, die mit der Abtriebswelle wirkverbunden oder wirkverbindbar ist. Die elektrische Maschine ist dem Schaltgetriebe triebtechnisch nachgeschaltet.

Ferner offenbart die DE 10 2018 203 361 B3 ein Verfahren zum Antrieb eines Elektrofahrrads, wobei das Verfahren die folgenden Schritte aufweist: Erfassung einer ersten Sensorgröße, welche eine aktuelle Kadenz eines Fahrers des Elektrofahrrads repräsentiert; Erfassung einer zweiten Sensorgröße, welche eine aktuelle Trittkraft des Fahrers repräsentiert; und Erfassung einer aktuellen Geschwindigkeit des Elektrofahrrads; Erfassung einer Eingabe des Fahrers, umfassend eine Sollgeschwindigkeit des Elektrofahrrads und eine Solltrittkraft des Fahrers, und/oder eine Sollkadenz des Fahrers; Anpassung eines Übersetzungsverhältnisses eines elektrisch ansteuerbaren Schaltgetriebes des Elektrofahrrads in Abhängigkeit der erfassten ersten Sensorgröße, der erfassten zweiten Sensorgröße, der Solltrittkraft und/oder der Sollkadenz; und Regelung des Elektromotors in Abhängigkeit der erfassten Geschwindigkeit und der Sollgeschwindigkeit.

Die Aufgabe der vorliegenden Erfindung besteht darin, eine Antriebsvorrichtung für ein Fahrrad und ein Verfahren zur Steuerung der Antriebsvorrichtung zu schaffen, die eine verschleißarme Gangrückschaltung ermöglichen. Insbesondere sollen Betätigungs- und Übertragungskräfte während der Gangrückschaltung verringert werden.

Diese Aufgaben werden gelöst durch die Merkmale der Patentansprüche 1 und 5. Vorteilhafte Ausführungsformen sind Gegenstand der davon abhängigen Ansprüche, der nachfolgenden Beschreibung sowie der Figuren.

Eine erfindungsgemäße Antriebsvorrichtung für ein Fahrrad umfasst ein Schaltgetriebe mit mehreren Gängen und einer Abtriebswelle, wobei der jeweilige Gang mittels einer Schalteinrichtung einstellbar ist, wobei die Abtriebswelle dazu eingerichtet ist, über einen Zugmitteltrieb mit einem Antriebsrad des Fahrrads wirkverbunden zu sein, eine Kurbelwelle mit einer Tretkurbel zum Einleiten einer Antriebsleistung eines Fahrradfahrers in das Schaltgetriebe, wobei die Kurbelwelle mit der Abtriebswelle wirkverbunden ist, eine elektrische Maschine mit einer Rotorwelle zum Einleiten einer Antriebleistung der elektrischen Maschine in das Schaltgetriebe, wobei die Rotorwelle mit der Abtriebswelle wirkverbunden ist, wobei die elektrische Maschine dazu eingerichtet ist, eine Trittfrequenz des Fahrradfahrers zumindest zu verringern, Mittel zum Erfassen eines Tretkurbelwinkels sowie einer Kurbelwellendrehzahl und Generieren entsprechender Sensordaten, Mittel zum Erfassen einer Abtriebswellendrehzahl und Generieren entsprechender Sensordaten, Mittel zum Erfassen einer Rotorwellendrehzahl und Generieren entsprechender Sensordaten, und eine Steuereinrichtung, die dazu ausgebildet ist, diese Sensordaten zu verarbeiten und eine Gangrückschaltung aus einem aktuell eingelegten Gang in einen nächstkleineren Gang in Abhängigkeit dieser Sensordaten durch Bestromung der elektrischen Maschine zu steuern.

Mit anderen Worten erfolgt die Gangrückschaltung stets in Abhängigkeit der Sensordaten von Tretkurbelwinkel, Kurbelwellendrehzahl, Abtriebswellendrehzahl und Rotorwellendrehzahl, wobei diese Sensordaten über dazugehörige Mittel entweder unmittelbar an dem jeweiligen Bauteil sensiert werden oder mittelbar über weitere Größen berechnet werden. In Abhängigkeit dieser Sensordaten wird die Bestromung der elektrischen Maschine derart gesteuert bzw. geregelt, dass Betätigungs- und Übertragungskräfte während der Gangrückschaltung verringert werden, um die Gangrückschaltung besonders verschleißarm durchzuführen.

Insbesondere ist unter dem Begriff "Erfassen" nicht nur ein unmittelbares Sensieren, sondern auch ein mittelbares Berechnen der jeweiligen Größe aus anderen Größen zu verstehen. Unter dem Begriff "Sensordaten" sind Informationen zu jeweiligen Größen zu verstehen, die mittels der Steuervorrichtung verarbeitet werden können.

Der Fahrradfahrer leitet über Pedalen an der Tretkurbel eine Antriebsleistung, also eine Antriebsdrehzahl und ein Antriebsdrehmoment, auf die Kurbelwelle ein, wobei die Kurbelwelle über das Schaltgetriebe mit der Abtriebswelle wirkverbunden ist. Die elektrische Maschine weist einen gehäusefesten Stator und einen mit der Rotorwelle drehfest verbundenen Rotor auf, wobei über die Rotorwelle eine weitere Antriebsleistung, also eine weitere Antriebsdrehzahl und ein weiteres Antriebsdrehmoment, in das Schaltgetriebe eingeleitet wird.

Im Leistungsfluss zwischen der Rotorwelle und der Abtriebswelle ist kein Freilauf oder andere Koppelelement angeordnet, das die Rotorwelle von der Abtriebswelle entkoppeln kann. Mithin ist die Rotorwelle stets mit der Abtriebswelle wirkverbunden, wobei die Antriebsleistung vom Fahrradfahrer und die Antriebsleistung von der elektrischen Maschine im Schaltgetriebe überlagert und in Abhängigkeit des jeweiligen Ganges übersetzt werden, wobei ferner diese übersetzte Antriebsleistung über die Abtriebswelle und den Zugmitteltrieb an das Antriebsrad des Fahrrads übertragen wird. Dadurch, dass die Rotorwelle mit der Abtriebswelle wirkverbunden ist und die Abtriebswelle mit der Kurbelwelle wirkverbunden ist, schleppt der Fahrradfahrer die Rotorwelle mit, wenn die elektrische Maschine abgeschaltet ist und keinen Betrag zur Antriebsleistung liefert. Die Wirkverbindung von Kurbelwelle, Rotorwelle und Abtriebswelle ermöglicht, dass eine Trittfrequenz des Fahrradfahrers mit Hilfe der elektrischen Maschine beeinflusst werden kann, insbesondere derart, dass die Trittfrequenz des Fahrradfahrers verringert wird, wenn eine Rotorwellendrehzahl verringert wird. Die Abtriebswelle ist derart mit der Kurbelwelle und der Rotorwelle wirkverbunden, dass stets gilt: Die Abtriebswellendrehzahl ist größer oder gleich der Rotorwellendrehzahl, wobei die Rotorwellendrehzahl größer oder gleich der Kurbelwellendrehzahl ist.

Wenn zwei Elemente, insbesondere zwei Wellen miteinander wirkverbunden sind, ist darunter zu verstehen, dass sie zwangsläufig mit einer proportionalen Drehzahl drehen. Dabei können zwischen den beiden Elementen weitere Elemente angeordnet sein über die eine mittelbare Verbindung erfolgt oder die beiden Elemente sind unmittelbar miteinander verbunden.

Insbesondere weist das Schaltgetriebe mehrere Zahnradpaare auf, wobei die Schalteinrichtung einen Aktuator und eine Schaltwalze umfasst. Mittels der Schalteinrichtung sind die jeweiligen Zahnradpaare derart schaltbar, dass die Gänge, und somit die Übersetzungsverhältnisse zwischen den beiden Eingangswellen des Schaltgetriebes, nämlich der Rotorwelle und der Kurbelwelle, und der Ausgangswelle des Schaltgetriebes, nämlich der Abtriebswelle, eingestellt werden. Für die Einstellung bzw. Änderung der Übersetzung des Schaltgetriebes werden Steuerbefehle von der Steuereinrichtung an die Schalteinrichtung übermittelt, sodass diese beispielsweise automatisiert betrieben wird. Alternativ erfolgt eine Änderung der Übersetzung des Schaltgetriebes auf Wunsch des Fahrradfahrers bei Betätigung entsprechender Eingabemittel. Beispielsweise kann die Rotorwelle der elektrischen Maschine über ein Planetengetriebe mit einer Eingangswelle des Schaltgetriebes wirkverbunden sein, um die Übersetzung weiter zu erhöhen. Insbesondere ist die elektrische Maschine mit einem wiederaufladbaren, elektrischen Speicher verbunden.

Vorzugsweise ist mindestens ein erster Sensor mit der Kurbelwelle drehfest verbunden und als Mittel zum Erfassen eines Tretkurbelwinkels sowie einer Kurbelwellendrehzahl eingerichtet. Insbesondere kann der erste Sensor entweder unmittelbar an der Kurbelwelle oder an einem drehfest mit der Kurbelwelle verbundenen Element angeordnet sein. Unter einer "drehfesten Verbindung" ist zu verstehen, dass zwei Elemente mit der gleichen Drehzahl rotieren. Beispielsweise ist der erste Sensor als Drehwinkelsensor ausgebildet und dazu eingerichtet, den Tretkurbelwinkel im Bereich von 0 Grad bis 360 Grad zu sensieren, wobei dies einer vollen Umdrehung entspricht. Insbesondere ist der Drehwinkelsensor durch einen zeitlichen Bezug auch zum Sensieren der Kurbelwellendrehzahl eingerichtet. Demnach werden die Umdrehungen der Kurbelwelle pro Minute sensiert. Alternativ kann der Tretkurbelwinkel von Mitteln zum Erfassen des Tretkurbelwinkels berechnet werden. Beispielsweise kann der Tretkurbelwinkel und somit auch die Kurbelwellendrehzahl aus dem Drehmomentverlauf der Kurbelwelle berechnet werden, wobei der Drehmomentverlauf im Wesentlichen einer Sinusfunktion entspricht und die Hochpunkte der Funktion bei 90 Grad und 270 Grad sind, wobei die Tiefpunkte der Funktion bei 0 Grad bzw. 360 Grad und 180 Grad sind. Dies rührt daher, dass der Fahrradfahrer bei einem Tretkurbelwinkel von 90 Grad und 270 Grad den größten Hebelarm zum Aufbringen seiner Trittkraft auf die Pedalen hat. Demgegenüber ist der Hebelarm bei einem Tretkurbelwinkel von 0 Grad bzw. 360 Grad und 180 Grad minimal, sodass diese Tretkurbelwinkel als Totpunkte der Tretkurbel definiert sind. Bei einem Tretkurbelwinkel von 90 Grad und 270 Grad sind die Tretkurbeln horizontal ausgerichtet. Bei einem Tretkurbelwinkel von 0 Grad bzw. 360 Grad und 180 Grad sind die Tretkurbeln vertikal ausgerichtet.

Vorzugsweise ist mindestens ein zweiter Sensor mit der Abtriebswelle drehfest verbunden und als Mittel zum Erfassen einer Abtriebswellendrehzahl und Generieren entsprechender Sensordaten eingerichtet. Beispielsweise kann der zweite Sensor unmittelbar an der Abtriebswelle oder an einem Kettenblatt, das drehfest mit der Abtriebswelle verbunden und Teil des Zugmitteltriebs ist, oder an einem anderen drehfest mit der Abtriebswelle verbundenen Element angeordnet sein. Beispielsweise ist der zweite Sensor als Hall-Sensor ausgebildet und eingerichtet die Abtriebswellendrehzahl zu sensieren. Insbesondere werden dabei die Umdrehungen der Abtriebswelle pro Minute sensiert. Alternativ kann die Abtriebswellendrehzahl von Mitteln zum Erfassen der Abtriebswellendrehzahl berechnet werden. Beispielsweise kann die Abtriebswellendrehzahl aus der Geschwindigkeit des Fahrrads oder einer Drehzahl am Antriebsrad des Fahrrads berechnet werden.

Vorzugsweise ist mindestens ein dritter Sensor mit der Rotorwelle drehfest verbunden und als Mittel zum Erfassen einer Rotorwellendrehzahl und Generieren entsprechender Sensordaten eingerichtet. Insbesondere kann der dritte Sensor entweder unmittelbar an der Rotorwelle oder an einem drehfest mit der Rotorwelle verbundenen Element angeordnet sein. Beispielsweise ist der dritte Sensor als Hall-Sensor ausgebildet und dazu eingerichtet, die Rotorwellendrehzahl zu sensieren. Insbesondere werden dabei die Umdrehungen der Rotorwelle pro Minute sensiert. Alternativ kann die Rotorwellendrehzahl von Mitteln zum Erfassen der Rotorwellendrehzahl berechnet werden. Beispielsweise kann die Rotorwellendrehzahl aus der Bestromung der elektrischen Maschine berechnet werden, wobei hierzu insbesondere die an der elektrischen Maschine anliegende Spannung erfasst wird.

Gemäß einem erfindungsgemäßen Verfahren zur Steuerung der erfindungsgemäßen Antriebsvorrichtung wird bei Anforderung einer Gangrückschaltung aus einem aktuell eingelegten Gang in einen nächstkleineren Gang eine Bestromung der elektrischen Maschine in einem Bereich von höchstens 30 Grad um einen Totpunkt der Tretkurbel herum zumindest derart abgesenkt, dass eine Rotorwellendrehzahl und eine Kurbelwellendrehzahl geringer als eine Abtriebswellendrehzahl sind. Wenn die Rotorwellendrehzahl und die Kurbelwellendrehzahl geringer als die Abtriebswellendrehzahl sind, befindet sich das Fahrrad im Schubbetrieb. Der Bereich von höchstens 30 Grad um einen Totpunkt der Tretkurbel herum umfasst einen Bereich von mindestens 30 Grad vor Erreichen eines Totpunktes der Tretkurbel bis höchstens 30 Grad nach Überschreitung eines Totpunktes der Tretkurbel und kann in Abhängigkeit vom Bezugssystem eine Unschärfe aufweisen. Beispielsweise kann die Unschärfe bei einem Neigungswinkel des Fahrrads von 20 Grad, wenn das Fahrrad bergauf oder bergab fährt, dementsprechend auch 20 Grad betragen. Die Neigung des Fahrrads verschiebt somit den oberen und unteren Totpunkt der Tretkurbel, der bei einer neigungsfreien Positionierung des Fahrrads bei 0 Grad bzw. 360 Grad und 180 Grad angeordnet ist. Unter einem "Totpunkt der Tretkurbel" ist ein Winkel an der Tretkurbel mit einem minimalen Hebelarm zum Einleiten einer Trittkraft des Fahrradfahrers zu verstehen. Demnach kann der Fahrradfahrer im oberen und unteren Totpunkt der Tretkurbel nur ein minimales Drehmoment und somit eine minimale Antriebsleistung auf die Kurbelwelle einleiten. Gemäß einem weiteren Verfahrensschritt des erfindungsgemäßen Verfahrens wird, wenn die Rotorwellendrehzahl um mindestens 2% verringert wurde, der aktuell eingelegte Gang ausgelegt. Dadurch werden Auslegekräfte bei der Gangschaltung und somit auch ein Verschleiß verringert. Danach wird die elektrische Maschine derart stärker bestromt, dass eine Rotorwellendrehzahl an eine höhere Zieldrehzahl für den nächstkleineren Gang angenähert wird. Der nächstkleinere Gang wird eingelegt, sobald die Zieldrehzahl für den nächstkleineren Gang erreicht wird. Dadurch werden Einlegekräfte bei der Gangschaltung und somit auch ein Verschleiß verringert. Sobald der nächstkleinere Gang eingelegt ist, ist die Gangrückschaltung abgeschlossen. Insbesondere erfolgt die Gangrückschaltung mittels formschlüssiger Schaltelemente.

Vorzugsweise wird der aktuell eingelegte Gang ausgelegt, wenn die Rotorwellendrehzahl um mindestens 10% gegenüber einer zuvor eingestellten Rotorwellendrehzahl verringert wurde. Beispielsweise wird der aktuell eingelegte Gang ausgelegt, wenn die Rotorwellendrehzahl um 200 bis 400 Umdrehungen pro Minute gegenüber einer zuvor eingestellten Rotorwellendrehzahl verringert wurde. Dieser sogenannte Offset erhöht den Komfort bei der Gangrückschaltung.

Vorzugsweise wird die Bestromung der elektrischen Maschine in dem Bereich von höchstens 30 Grad um den Totpunkt der Tretkurbel herum abgestellt, wobei die elektrische Maschine wieder in Betrieb genommen wird, sobald die Rotorwellendrehzahl um mindestens 2%, bevorzugt mindestens 10% verringert wurde. Mithin wird die elektrische Maschine abgeschaltet, sodass keine Bestromung der elektrischen Maschine mehr erfolgt, wodurch insbesondere elektrische Energie eingespart wird.

Nachdem der aktuell eingelegte Gang ausgelegt wird, wird die elektrische Maschine vorzugsweise mit einem Grenzstrom betrieben, der größer als die zuvor eingestellte Bestromung aber kleiner als eine anfangs eingestellte Bestromung ist. Beispielsweise beträgt dieser Grenzstrom 100 mA bis 500 mA. Der Grenzstrom kann konstant sein oder im zeitlichen Verlauf ansteigen. Unter einer "zuvor eingestellten Bestromung" ist die Bestromung der elektrischen Maschine unmittelbar vor dem Betrieb der elektrischen Maschine mit dem Grenzstrom zu verstehen. Unter einer "anfangs eingestellten Bestromung" ist die Bestromung der elektrischen Maschine unmittelbar vor der Absenkung der Bestromung im Bereich von höchstens 30 Grad um einen Totpunkt der Tretkurbel herum zu verstehen, also die Bestromung, die bewirken soll, dass eine Rotorwellendrehzahl und eine Kurbelwellendrehzahl geringer als eine Abtriebswellendrehzahl sind.

Wenn die elektrische Maschine bei Anforderung einer Gangrückschaltung nicht bestromt ist, wird vorzugsweise die Bestromung der elektrischen Maschine mindestens 45 Grad bis höchstens 90 Grad vor Erreichen eines Totpunktes der Tretkurbel eingeleitet. Beispielsweise kann die elektrische Maschine aufgrund des gewählten Fahrmodus abgeschaltet und somit unbestromt sein. Das Einschalten der elektrischen Maschine durch Bestromung führt zu einem Aufprägen einer Rotorwellendrehzahl. Damit dies nicht ruckartig, sondern besonders komfortabel erfolgt, ist die Einhaltung des Bereichs von frühestens 90 Grad und spätestens 45 Grad bis vor Erreichen eines Totpunktes der Tretkurbel für die Bestromung der elektrischen Maschine wesentlich. Falls die 45 Grad vor Erreichen des Totpunktes bereits unterschritten sind, wird der unmittelbar bevorstehende Totpunkt übersprungen und die Bestromung der elektrischen Maschine frühestens 90 Grad jedoch spätestens 45 Grad vor Erreichen des nächsten Totpunktes der Tretkurbel eingeleitet.

Vorzugsweise wird die Bestromung der elektrischen Maschine nach der Gangrückschaltung wieder auf denselben Wert eingestellt, wie bei der Anforderung der Gangrückschaltung. Somit generiert die elektrischen Maschine nach der Gangrückschaltung eine identische Antriebsleistung wie bei der Anforderung der Gangrückschaltung, sofern sich die Fahrsituation nicht geändert hat.

Vorzugsweise wird die elektrische Maschine im unbestromten Zustand vor oder nach einer Gangrückschaltung in den hochohmigen Modus versetzt, um einen widerstandsärmeren Antrieb des Fahrrads über die Kurbelwelle zu ermöglichen. Im unbestromten Zustand ist die elektrische Maschine abgeschaltet, sodass diese keine Antriebsleistung generiert. Dadurch, dass die Rotorwelle mit der Abtriebswelle wirkverbunden ist und die Abtriebswelle mit der Kurbelwelle wirkverbunden ist, schleppt der Fahrradfahrer die Rotorwelle mit, wenn die elektrische Maschine abgeschaltet ist und keinen Betrag zur Antriebsleistung liefert. Um dennoch das Fahren ohne Motorunterstützung, beispielsweise bei leerem Energiespeicher, leichtgängig zu gestalten, wird die elektrische Maschine, insbesondere die Brücken der elektrischen Maschine, in den hochohmigen Modus (Tri-State) versetzt, sodass nur noch die interne Reibung der elektrischen Maschine vom Fahrradfahrer beim Antrieb überwunden wird. Der hochohmige Modus ist definiert als ein Modus, in welchem die Brücken der elektrischen Maschine einen höheren Widerstand aufweisen als im regulären Betrieb. Die Brücken werden nicht vollständig geschlossen, sondern nahezu geschlossen.

Eine erfindungsgemäße Steuereinrichtung, ist dazu ausgebildet, ein erfindungsgemäßes Verfahren durchzuführen. Die obigen Definitionen sowie Ausführungen zu technischen Effekten, Vorteilen und vorteilhaften Ausführungsformen des erfindungsgemäßen Verfahrens gelten sinngemäß ebenfalls für die erfindungsgemäße Steuereinrichtung.

Ein erfindungsgemäßes Fahrrad umfasst eine erfindungsgemäße Antriebsvorrichtung, die über einen Zugmitteltrieb mit einem Antriebsrad des Fahrrads wirkverbunden ist. Das erfindungsgemäße Fahrrad umfasst die üblichen Komponenten eines mit Muskelkraft antreibbaren Fahrrades und zusätzlich die erfindungsgemäße Antriebsvorrichtung, welche eine als Traktionsmotor ausgebildete elektrische Maschine, mit dem Schaltgetriebe sowie einen elektrischen Energiespeicher aufweist. Derartige Fahrräder sind unter der Bezeichnung Elektrofahrrad, E-Bike oder Pedelec bekannt. Der elektrische Antrieb kann die Belastung des Radfahrers bei der Fortbewegung verringern oder seine Reichweite steigern. Die obigen Definitionen sowie Ausführungen zu technischen Effekten, Vorteilen und vorteilhaften Ausführungsformen des erfindungsgemäße Antriebsvorrichtung gelten sinngemäß ebenfalls für das erfindungsgemäße Fahrrad.

Im Folgenden wird ein Ausführungsbeispiel der Erfindung anhand der schematischen Zeichnungen näher erläutert, wobei gleiche Elemente mit dem gleichen Bezugszeichen versehen sind. Hierbei zeigt
- Fig. 1: eine stark vereinfachte schematische Darstellung eines Fahrrads mit einer erfindungsgemäßen Antriebsvorrichtung,
- Fig. 2: eine stark vereinfachte schematische Darstellung der erfindungsgemäßen Antriebsvorrichtung gemäß Fig. 1, und
- Fig. 3: ein Diagramm zur Veranschaulichung eines beispielhaften Ablaufs eines erfindungsgemäßen Verfahrens.

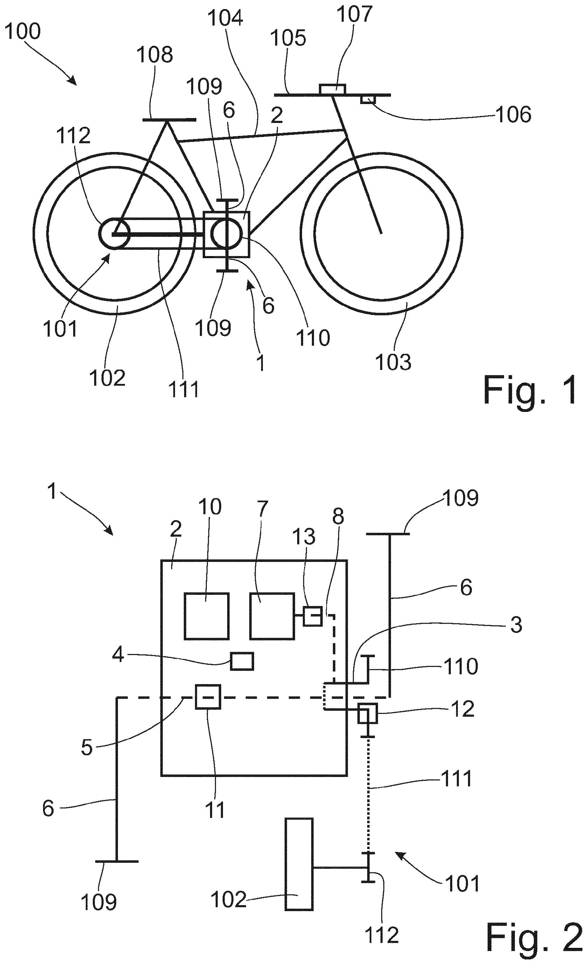

Gemäß Fig. 1 ist ein erfindungsgemäßes Fahrrad 100 stark vereinfacht dargestellt. Das Fahrrad 100 weist einen Rahmen 104 auf, an dem ein Vorderrad 103, ein als Antriebsrad 102 ausgebildetes Hinterrad, ein Fahrradlenker 105 und ein Sattel 108 angeordnet sind. Ferner weist das Fahrrad 100 eine Antriebsvorrichtung 1 auf, die dazu eingerichtet ist, das Fahrrad 100 zumindest mit einer Muskelkraft eines - hier nicht dargestellten - Fahrradfahrers anzutreiben. Dazu sitzt der Fahrradfahrer beim Fahren beispielsweise auf dem Sattel 108 und bringt über jeweilige Pedalen 109, die über jeweilige Tretkurbeln 6 mit der Antriebsvorrichtung 1 verbunden sind, eine Antriebsleistung in das Schaltgetriebe 2 der Antriebsvorrichtung 1 ein. Die Antriebsvorrichtung 1 umfasst auch eine elektrische Maschine 7, die nur in Fig. 2 dargestellt und dazu eingerichtet ist, ihrerseits auch eine Antriebsleistung in das Schaltgetriebe 2 einzuleiten, um den Fahrradfahrer zu unterstützen. Die Antriebsleistungen der elektrischen Maschine 7 und des Fahrradfahrers werden im Schaltgetriebe 2 überlagert und über eine Abtriebswelle 3, die nur in Fig. 2 dargestellt ist, auf das Antriebsrad 102 des Fahrrads 100 übertragen. Die Abtriebswelle 3 ist dazu über ein erstes Kettenblatt 110, das mit der Abtriebswelle 3 drehfest verbunden ist, ein zweites Kettenblatt 112, das mit dem Antriebsrad 102 drehfest verbunden ist, und eine dazwischen angeordnete Kette 111 mit dem Antriebsrad 102 antriebswirksam verbunden. Mithin bilden die beiden Kettenblätter 110, 112 und die Kette 111 einen als Kettentrieb ausgebildeten Zugmitteltrieb 101. Alternativ ist auch die Verwendung eines Riementriebs denkbar, um eine Antriebsleistung von der Antriebsvorrichtung 1 auf das Antriebsrad 102 des Fahrrads 100 zu übertragen.

Ferner sind an dem Fahrradlenker 105 Eingabemittel 106 angeordnet, die der Fahrradfahrer zur Eingabe verwenden kann. Beispielsweise sind die Eingabemittel 106 als Betätigungstasten ausgebildet, wobei eine erste Betätigungstaste zum Runterschalten eines Ganges und eine zweite Betätigungstaste zum Hochschalten eines Ganges vorgesehen sind. Das Runterschalten eines Ganges, also eine Gangrückschaltung verändert die Übersetzung im Schaltgetriebe 2 derart, dass die Drehzahl an der Abtriebswelle 3 erhöht und das Drehmoment an der Abtriebswelle 3 verringert wird. An dem Fahrradlenker 105 ist ferner auch eine optische Anzeigevorrichtung 107 angeordnet, die dazu eingerichtet ist, zumindest antriebsspezifische Anzeigedaten, insbesondere eine Gangstufe und eine Geschwindigkeit des Fahrrads 100 für den Fahrradfahrer zu visualisieren.

In Fig. 2 ist die Antriebsvorrichtung 1 des Fahrrads 100 aus Fig. 1 stark vereinfacht dargestellt. Die Antriebsvorrichtung 1 umfasst das Schaltgetriebe 2, das mehrere Gänge und die Abtriebswelle 3 aufweist. Die Gänge werden durch miteinander im Zahneingriff stehende Zahnradpaare, die vorliegend nicht dargestellt sind, realisiert. Der jeweilige Gang ist mittels einer Schalteinrichtung 4 einstellbar, wobei die Schalteinrichtung 4 einen - nicht näher dargestellten - Aktuator und eine - nicht näher dargestellte - Schaltwalze zur Auswahl und Betätigung jeweiliger Zahnradpaare aufweist.

Eine Kurbelwelle 5 verbindet die Tretkurbeln 6 drehfest miteinander, wobei über die Pedalen 109 an den Tretkurbeln 6 die Antriebsleistung des Fahrradfahrers in das Schaltgetriebe 2 eingeleitet wird. Die Kurbelwelle 5 ist mit der Abtriebswelle 3 des Schaltgetriebe 2 wirkverbunden. Die elektrische Maschine 7 weist eine Rotorwelle 8 auf, die zum Einleiten einer Antriebleistung der elektrischen Maschine 7 in das Schaltgetriebe 2 mit der Abtriebswelle 3 wirkverbunden ist. Die Kurbelwelle 5, die Rotorwelle 8 und die Abtriebswelle 3 sind derart miteinander wirkverbunden, dass eine Abtriebswellendrehzahl größer oder gleich einer Rotorwellendrehzahl ist, wobei die Rotorwellendrehzahl größer oder gleich einer Kurbelwellendrehzahl ist. Die Wirkverbindung von Kurbelwelle 5, Rotorwelle 8 und Abtriebswelle 3, insbesondere der Verzicht eines zwischen Rotorwelle 8 und Abtriebswelle 3 angeordneten Freilaufs, ermöglicht, dass eine Trittfrequenz des Fahrradfahrers mit Hilfe der elektrischen Maschine 7 beeinflusst werden kann, insbesondere derart, dass die Trittfrequenz des Fahrradfahrers verringert wird, wenn eine Rotorwellendrehzahl verringert wird. Die Abtriebswelle 3 ist über den Zugmitteltrieb 101 mit dem Antriebsrad 102 des Fahrrads 100 antriebswirksam verbunden, um die Antriebsleistung von der Antriebsvorrichtung 1 auf das Antriebsrad 102 des Fahrrads 100 zu übertragen.

Ferner weist die Antriebsvorrichtung 1 zumindest einen ersten Sensor 11, einen zweiten Sensor 12, einen dritten Sensor 13 und eine Steuereinrichtung 10 auf. Der erste Sensor 11 ist an der Kurbelwelle 5 angeordnet und als Mittel zum Erfassen eines Tretkurbelwinkels sowie einer Kurbelwellendrehzahl und Generieren entsprechender Sensordaten ausgebildet. Der zweite Sensor 12 ist an der Abtriebswelle 103 angeordnet und als Mittel zum Erfassen einer Abtriebswellendrehzahl und Generieren entsprechender Sensordaten ausgebildet. Der dritte Sensor 13 ist an der Rotorwelle 8 angeordnet und als Mittel zum Erfassen einer Rotorwellendrehzahl und Generieren entsprechender Sensordaten ausgebildet. Die Steuereinrichtung 10 ist mit den Sensoren 11, 12, 13 verbunden, wobei die Sensordaten von der Steuereinrichtung 10 empfangen und verarbeitet werden, um eine Gangrückschaltung aus einem aktuell eingelegten Gang in einen nächstkleineren Gang in Abhängigkeit dieser Sensordaten durch Bestromung der elektrischen Maschine 7 zu steuern.

Insbesondere wird der Schaltablauf derart gesteuert, dass die elektrische Maschine 7 in Abhängigkeit der Sensordaten gezielte bestromt wird, um zu bestimmten Zeitpunkten, insbesondere bei bestimmten Winkelbereichen der Tretkurbeln 6 eine Drehzahl und ein Drehmoment derart zu beeinflussen, dass Kräfte beim Einlegen und Auslegen der Gänge, also während des Gangwechsels, reduziert werden und dadurch der Verschleiß der Antriebsvorrichtung 1 verringert wird.

In Fig. 1 und Fig. 2 sind die Tretkurbeln 6 in einem Totpunkt dargestellt, also vertikal ausgerichtet. Mit anderen Worten ist eine der beiden Tretkurbeln 6 in einem Winkel von 0 Grad bzw. 360 Grad ausgerichtet und die anderen der beiden Tretkurbeln 6 in einem Winkel von 180 Grad ausgerichtet. In dieser Stellung der Tretkurbeln 6 kann der Fahrradfahrer über die Pedalen 109 nur ein minimales Drehmoment und somit nur eine minimale Antriebsleistung in die Antriebsvorrichtung 1 einspeisen, weil ein Hebelarm minimal ist. Wenn die Tretkurbeln 6 horizontal ausgerichtet sind, also um 90 Grad verdreht gegenüber der dargestellten vertikalen Stellung, kann der Fahrradfahrer über die Pedalen 109 ein maximales Drehmoment und somit eine maximale Antriebsleistung in die Antriebsvorrichtung 1 einspeisen, weil der Hebelarm die maximale Länge aufweist. Somit kann der Drehmomentverlauf des Fahrradfahrers durch eine sinusförmige Funktion beschrieben werden, wobei die Hochpunkte des Drehmomentverlaufs stets bei einer horizontalen Ausrichtung der Tretkurbeln, also 90 Grad und 270 Grad und die Tiefpunkte des Drehmomentverlaufs oder Totpunkte der Tretkurbeln 6 stets bei einer vertikalen Ausrichtung der Tretkurbeln 6, also bei 0 Grad bzw. 360 Grad und 180 Grad vorliegen.

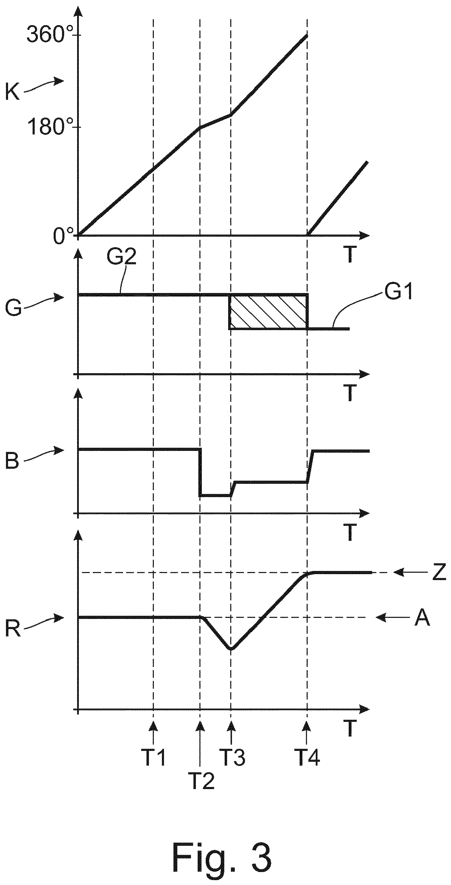

Gemäß Fig. 3 sind vier Diagramme in einem gemeinsamen Diagramm zusammengeführt, um ein erfindungsgemäßes Verfahren zur Steuerung der Antriebsvorrichtung 1 gemäß Fig. 2 zu veranschaulichen. Auf einer jeweiligen Abszisse der vier Diagramme ist eine Zeit T aufgetragen, wobei alle vier Zeitachsen identisch sind und somit denselben zeitlichen Verlauf aufweisen. Demgegenüber sind auf einer jeweiligen Ordinate - von unten nach oben - zunächst eine Rotorwellendrahzahl R, darüber eine Bestromung B der elektrischen Maschine 7, darüber die Gangauswahl G und darüber der Tretkurbelwinkel K aufgetragen. Der Tretkurbelwinkel K verändert sich beim Rotieren der Kurbelwelle 5 zwischen 0 Grad und 360 nach Maßgabe der Kadenz. Beispielsweise beträgt die Kadenz 60, sodass der Fahrradfahrer durch seine Trittfrequenz die Kurbelwelle 5 mit einer Drehzahl von 60 Umdrehungen pro Minute betreibt. Wenn der Fahrradfahrer langsamer in die Pedalen 109 tritt, verringert sich die Kadenz, wodurch die Steigung beim Graphen des Tretkurbelwinkels K geringer wird. Wenn der Fahrradfahrer schneller in die Pedalen 109 tritt, vergrößert sich die Kadenz, wodurch die Steigung beim Graphen des Tretkurbelwinkels K größer wird.

Zum Zeitpunkt T1 wird beispielsweise vom Fahrradfahrer über Eingabemittel eine Gangrückschaltung aus einem aktuell eingelegten Gang G2 in einen nächstkleineren Gang G1 angefordert.

Zum Zeitpunkt T2 wird die Bestromung B der elektrischen Maschine abrupt abgesenkt, wobei der Tretkurbelwinkel K zu diesem Zeitpunkt bei einem Totpunkt der Tretkurbel, vorliegend bei 180 Grad, vorliegt. Die Rotorwellendrehzahl R sinkt durch die Verringerung der Bestromung derart, dass die Rotorwellendrehzahl R und die Kurbelwellendrehzahl geringer als eine Abtriebswellendrehzahl sind. Insbesondere wird die Kurbelwelle durch die Verringerung der Rotorwellendrehzahl gebremst. Dadurch sinkt gleichzeitig die Trittfrequenz des Fahrradfahrers, was zu einem Knick im Graphen des Tretkurbelwinkels K zum Zeitpunkt T2 führt. Sobald die Rotorwellendrehzahl geringer als zuvor ist, beispielsweise unmittelbar nach T2, bei einer Verringerung von 2%, könnte bereits der aktuell eingelegte Gang G2 ausgelegt werden.

Zum Zeitpunkt T3 ist die Rotorwellendrehzahl 10% geringer als zuvor, zum Zeitpunkt T2. Ferner wird zum Zeitpunkt T3 der aktuell eingelegte Gang G2 besonders verschleißarm und komfortabel ausgelegt, da keine Kraft über die Kurbelwelle und die Rotorwelle auf das Schaltgetriebe aufgeprägt wird. Das Auslegen des aktuell eingelegten Gangs G2 wird grafisch durch den schraffierten Bereich bei der Gangauswahl G zwischen dem Zeitpunkt T3 und T4 dargestellt. Ferner wird zum Zeitpunkt T3, direkt nach dem Auslegen des aktuell eingelegten Gangs G2 die elektrische Maschine 7 derart stärker bestromt, dass eine Rotorwellendrehzahl R an eine höhere Zieldrehzahl für den nächstkleineren Gang G1 angenähert wird. Dadurch wird auch die Trittfrequenz des Fahrradfahrers erhöht, was zu einem weiteren Knick im Graphen des Tretkurbelwinkels K zum Zeitpunkt T3 führt. Die elektrische Maschine 7 wird mit einem Grenzstrom betrieben, der größer als die zuvor eingestellte Bestromung, also zwischen T2 und T3, aber kleiner als eine anfangs eingestellte Bestromung, also zwischen T1 und T2, ist. Mittels des Grenzstroms an der elektrischen Maschine und der Antriebsleistungseingabe vom Fahrradfahrer wird die Abtriebswellendrehzahl auf eine Zieldrehzahl Z für den nächstkleineren Gang G1 angehoben, wodurch ein weicher Übergang geschaffen wird.

Zum Zeitpunkt T4 ist Zieldrehzahl Z für den nächstkleineren Gang G1 erreicht, wobei der nächstkleinere Gang G1 besonders verschleißarm eingelegt wird. Die Gangrückschaltung ist dadurch abgeschlossen. Die Zieldrehzahl Z für den nächstkleineren Gang G1 ist höher als eine Anfangsdrehzahl A für den zum Zeitpunkt T1 eingelegten Gang G2.

### Bezugszeichen

- 1: Antriebsvorrichtung
- 2: Getriebe
- 3: Abtriebswelle
- 4: Schalteinrichtung
- 5: Kurbelwelle
- 6: Tretkurbel
- 7: elektrische Maschine
- 8: Rotorwelle
- 10: Steuereinrichtung
- 11: erster Sensor
- 12: zweiter Sensor
- 13: dritter Sensor
- 100: Fahrrad
- 101: Zugmitteltrieb
- 102: Antriebsrad
- 103: Vorderrad
- 104: Rahmen
- 105: Fahrradlenker
- 106: Eingabemittel
- 107: Anzeigevorrichtung
- 108: Sattel
- 109: Pedale
- 110: erstes Kettenblatt
- 111: Kette
- 112: zweites Kettenblatt
- A: Anfangsdrehzahl
- B: Bestromung
- G: Gangauswahl
- G1: nächstkleineren Gang
- G2: aktuell eingelegte Gang
- K: Tretkurbelwinkel
- R: Rotorwellendrahzahl
- T: Zeit
- T1: Zeitpunkt
- T2: Zeitpunkt
- T3: Zeitpunkt
- T4: Zeitpunkt
- T5: Zeitpunkt
- T6: Zeitpunkt
- T7: Zeitpunkt
- T8: Zeitpunkt
- Z: Zieldrehzahl

## Patentansprüche

1. Antriebsvorrichtung (1) für ein Fahrrad (100), umfassend
• ein Schaltgetriebe (2) mit mehreren Gängen und einer Abtriebswelle (3), wobei der jeweilige Gang mittels einer Schalteinrichtung (4) einstellbar ist, wobei die Abtriebswelle (3) dazu eingerichtet ist, über einen Zugmitteltrieb (101) mit einem Antriebsrad (102) des Fahrrads (100) wirkverbunden zu sein,
• eine Kurbelwelle (5) mit einer Tretkurbel (6) zum Einleiten einer Antriebsleistung eines Fahrradfahrers in das Schaltgetriebe (2), wobei die Kurbelwelle (5) mit der Abtriebswelle (3) wirkverbunden ist,
• eine elektrische Maschine (7) mit einer Rotorwelle (8) zum Einleiten einer Antriebleistung der elektrischen Maschine (7) in das Schaltgetriebe (2), wobei die Rotorwelle (8) mit der Abtriebswelle (3) wirkverbunden ist, wobei die elektrische Maschine (7) dazu eingerichtet ist, eine Trittfrequenz des Fahrradfahrers zumindest zu verringern,
• Mittel zum Erfassen eines Tretkurbelwinkels sowie einer Kurbelwellendrehzahl und Generieren entsprechender Sensordaten,
• Mittel zum Erfassen einer Abtriebswellendrehzahl und Generieren entsprechender Sensordaten,
• Mittel zum Erfassen einer Rotorwellendrehzahl und Generieren entsprechender Sensordaten, und
• eine Steuereinrichtung (10), die dazu ausgebildet ist, diese Sensordaten zu verarbeiten und eine Gangrückschaltung aus einem aktuell eingelegten Gang in einen nächstkleineren Gang in Abhängigkeit dieser Sensordaten durch Bestromung der elektrischen Maschine (7) zu steuern.

2. Antriebsvorrichtung (1) nach Anspruch 1, wobei mindestens ein erster Sensor (11) mit der Kurbelwelle (5) drehfest verbunden und als Mittel zum Erfassen eines Tretkurbelwinkels sowie einer Kurbelwellendrehzahl eingerichtet ist.

3. Antriebsvorrichtung (1) nach einem der vorhergehenden Ansprüche, wobei mindestens ein zweiter Sensor (12) mit der Abtriebswelle (3) drehfest verbunden und als Mittel zum Erfassen einer Abtriebswellendrehzahl und Generieren entsprechender Sensordaten eingerichtet ist.

4. Antriebsvorrichtung (1) nach einem der vorhergehenden Ansprüche, wobei mindestens ein dritter Sensor (13) mit der Rotorwelle (8) drehfest verbunden und als Mittel zum Erfassen einer Rotorwellendrehzahl und Generieren entsprechender Sensordaten eingerichtet ist.

5. Verfahren zur Steuerung einer Antriebsvorrichtung (1) nach einem der Ansprüche 1 bis 4, **dadurch gekennzeichnet, dass**
• bei Anforderung einer Gangrückschaltung aus einem aktuell eingelegten Gang in einen nächstkleineren Gang eine Bestromung der elektrischen Maschine (7) in einem Bereich von höchstens 30 Grad um einen Totpunkt der Tretkurbel (6) herum zumindest derart abgesenkt wird, dass eine Rotorwellendrehzahl und eine Kurbelwellendrehzahl geringer als eine Abtriebswellendrehzahl sind,
• sobald die Rotorwellendrehzahl um mindestens 2% verringert wurde, wird der aktuell eingelegte Gang ausgelegt und die elektrische Maschine (7) derart stärker bestromt, dass eine Rotorwellendrehzahl an eine höhere Zieldrehzahl für den nächstkleineren Gang angenähert wird,
• wobei der nächstkleinere Gang eingelegt wird, sobald die Zieldrehzahl für den nächstkleineren Gang erreicht wird.

6. Verfahren nach Anspruch 5, wobei der aktuell eingelegte Gang ausgelegt wird, wenn die Rotorwellendrehzahl um mindestens 10% gegenüber einer zuvor eingestellten Rotorwellendrehzahl verringert wurde.

7. Verfahren nach Anspruch 5 oder 6, wobei die Bestromung der elektrischen Maschine (7) in dem Bereich von höchstens 30 Grad um den Totpunkt der Tretkurbel (6) herum abgestellt wird, wobei die elektrische Maschine (7) wieder in Betrieb genommen wird, sobald die Rotorwellendrehzahl um mindestens 2% verringert wurde.

8. Verfahren nach einem der Ansprüche 5 bis 7, wobei nachdem der aktuell eingelegte Gang ausgelegt wird, wird die elektrische Maschine (7) mit einem Grenzstrom betrieben, der größer als die zuvor eingestellte Bestromung aber kleiner als eine anfangs eingestellte Bestromung ist.

9. Verfahren nach einem der Ansprüche 5 bis 8, wobei wenn die elektrische Maschine (7) bei Anforderung einer Gangrückschaltung nicht bestromt ist, wird die Bestromung der elektrischen Maschine (7) mindestens 45 Grad bis höchstens 90 Grad vor Erreichen eines Totpunktes der Tretkurbel (6) eingeleitet.

10. Verfahren nach einem der Ansprüche 5 bis 9, wobei die Bestromung der elektrischen Maschine (7) nach der Gangrückschaltung wieder auf denselben Wert eingestellt wird, wie bei der Anforderung der Gangrückschaltung.

11. Verfahren nach einem der Ansprüche 5 bis 10, wobei die elektrische Maschine (7) im unbestromten Zustand vor oder nach einer Gangrückschaltung in den hochohmigen Modus versetzt wird, um einen widerstandsärmeren Antrieb des Fahrrads (100) über die Kurbelwelle (3) zu ermöglichen.

12. Steuereinrichtung (10), die dazu ausgebildet ist, ein Verfahren nach einem der Ansprüche 5 bis 11 durchzuführen.

13. Fahrrad (100), umfassend eine Antriebsvorrichtung (1) nach einem der Ansprüche 1 bis 4, wobei die Antriebsvorrichtung (1) über einen Zugmitteltrieb (101) mit einem Antriebsrad (102) des Fahrrads (100) wirkverbunden ist.
